# EUROPÄISCHE PATENTSCHRIFT

(11) **EP 4 602 507 B1**
(45) Veröffentlichungstag und Bekanntmachung des Hinweises auf die Patenterteilung: **02.09.2026**
(21) Anmeldenummer: 23789605.5
(22) Anmeldetag: 11.10.2023
(51) Int. Cl.: G06K 19/077, H01Q 1/22

(54) **TRANSPONDERETIKETT, SYSTEM UND VERFAHREN ZUM HERSTELLEN EINES TRANSPONDERETIKETTS FÜR EIN GEFÄSS**
TRANSPONDER LABEL, SYSTEM AND METHOD FOR PRODUCING A TRANSPONDER LABEL FOR A CONTAINER
ÉTIQUETTE DE TRANSPONDEUR, SYSTÈME ET PROCÉDÉ DE PRODUCTION D'UNE ÉTIQUETTE DE TRANSPONDEUR POUR UN RÉCIPIENT

(30) Priorität: 12.10.2022 DE 102022126577
(43) Veröffentlichungstag der Anmeldung: 20.08.2025
(73) Patentinhaber: Schreiner Group GmbH & Co. KG, 85764 Oberschleissheim (DE)
(72) Erfinder: CLAUSS, Conrad, 80939 München (DE)
(74) Vertreter: Epping - Hermann - Fischer
(86) Internationale Anmeldenummer: PCT/EP2023/078182
(87) Internationale Veröffentlichungsnummer: WO 2024/079184

(56) Entgegenhaltungen:
- IT-A1- TO20 100 493
- US-A1- 2022 318 588

## Beschreibung

Die vorliegende Erfindung betrifft ein Transponderetikett für ein Gefäß, das auf einfache und kostengünstige Weise eine zuverlässige elektronische Kennzeichnung zum Beispiel für ein pharmazeutisches Gefäß bereitstellt. Die Erfindung betrifft außerdem ein System mit einem solchen Transponderetikett. Die Erfindung betrifft weiter ein Verfahren zum Herstellen eines solchen Transponderetiketts.

Etikettieranordnungen umfassen üblicherweise ein Etikett, das der Autorisierung, der Identifizierung sowie der Authentifizierung oder zum Herkunftsnachweis dienen kann. Insbesondere kommen solche Etikettieranordnungen zum Einsatz, um Informationen zu einem Inhalt oder für eine Nachverfolgbarkeit bereitzustellen. Dies betrifft unter anderem Behälter im pharmazeutischen und medizinischen Bereich, deren Inhalte zuverlässig gekennzeichnet werden sollen.

Aus der Druckschrift IT TO2010A000493 A1 ist ein RFID-Etikett mit einer auf einem Substrat angeordneten Antennenstruktur bekannt, die als Dipol mit gefalteten Armen ausgebildet ist. Jeder Arm umfasst dabei zwei über eine Faltstelle miteinander verbundene Halbarme, die jeweils einen Mäander tragen, wobei der vom zentralen Schleifenbereich ausgehende Halbarm mit diesem verbunden ist und der gefaltete Halbarm in einem freien Ende ausläuft. Aus der Druckschrift US 2022/0318588 A1 ist ein RFID-Etikett für einen Behälter bekannt, das einen Schleifenleiter und eine Antenneneinheit mit zwei Leitereinheiten aufweist. Eine Leitereinheit umfasst ein mäanderförmiges erstes Element sowie ein lineares zweites Element, ein hakenförmiges drittes Element und gitterförmige vierte Elemente, die zur Impedanzanpassung vorgesehen sind.

Es ist eine Aufgabe, die der Erfindung zugrunde liegt, auf einfache und kostengünstige Weise zu einer zuverlässigen und komfortablen Kennzeichnung eines Gefäßes beizutragen. Die Aufgabe wird durch die Merkmale der unabhängigen Patentansprüche gelöst. Vorteilhafte Weiterbildungen sind in den jeweils abhängigen Patentansprüchen angegeben. Gemäß einem Aspekt der Erfindung weist ein Transponderetikett für ein Gefäß eine Trägerschicht und eine RFID-Funktionseinheit auf, die auf der Trägerschicht angeordnet ist. Die Trägerschicht ist zum Beispiel als Kunststofffolie, wie Polyethylenterephthalat (PET), ausgebildet. Die RFID-Funktionseinheit umfasst einen RFID-Chip und eine mit diesem gekoppelte Antennenstruktur. Die Antennenstruktur weist einen ersten Antennenabschnitt und einen zweiten Antennenabschnitt auf. Die Antennenstruktur weist ferner eine Antennenschleife auf, die zwischen dem ersten und dem zweiten Antennenabschnitt angeordnet und mit diesen gekoppelt ist. Zumindest einer der beiden Antennenabschnitte umfasst einen ersten mäanderförmigen Antennenarm und einen zweiten mäanderförmigen Antennenarm, die als separate Antennenarme ausgebildet und in einem vorgegebenen Abstand voneinander angeordnet und elektromagnetisch miteinander gekoppelt sind und die jeweils mit der Antennenschleife gekoppelt sind, sodass eine vorgegebene Anzahl von Schwingungsmoden der Antennenstruktur eingerichtet ist.

Mittels des beschriebenen Transponderetiketts ist eine besonders zuverlässige RFID-Funktionalisierung von Gefäßen, wie Spritzen, Injektionsfläschchen oder pharmazeutischen Vials realisierbar. Darüber hinaus eignet sich das Transponderetikett auch für weitere medizinische oder pharmazeutische Behälter oder Primärverpackungen. Das Transponderetikett kann auch für andere Gegenstände verwendet werden, für die eine elektronische Kennzeichnung nutzbringend ist. Die gezielt ausgebildeten und benachbart angeordneten mäanderförmigen Antennenarme sind induktiv und kapazitiv miteinander gekoppelt, sodass eine kontrolliert eingebrachte Modenerhöhung eingerichtet ist und die Antennenstruktur eine multimodale RFID-Antenne mit mehreren Resonanzfrequenzen realisiert.

Diese bewusst eingeführten Resonanzfrequenzen können gezielt auf einen vorgesehenen Anwendungsfall abgestimmt werden, sodass ein mit dem Transponderetikett versehenes Gefäß trotz unterschiedlicher Zustände oder Einflüsse zuverlässig elektronisch gekennzeichnet und ausgelesen werden kann. Es ist eine Erkenntnis im Zusammenhang mit der vorliegenden Erfindung, dass RFID-Kennzeichnung aufgrund verschiedener äußerer Randbedingungen herausfordernd ist. Solche äußeren Randbedingungen sind beispielsweise gegeben durch geringe Abmessungen eines Primärcontainer, sodass der für die Antenne zur Verfügung stehenden Platz stark eingeschränkt ist. Ferner kann eine Nähe zu dissipativen Medien, wie Glas, Wasser oder salzhaltige wässrige Lösungen, die Leistungsfähigkeit einer RFID-Einheit signifikant verringern. Zudem können, bei identischen Abmessungen von Primärcontainern, die Füllstände zum Beispiel von jeweiligen Medikamenten unterschiedlich ausgeprägt sein.

Solche Randbedingungen führen zu einer unerwünschten Frequenzverschiebung der Resonanzfrequenz und können bewirken, dass sich diese nicht mehr im Lesefenster eines Lesegerätes befindet. Ein RFID-Lesegerät zum Auslesen einer RFID-Einheit ist gemäß behördlichen Vorgaben zum Beispiel auf einen Lesebereich von 865-868 MHz eingerichtet. Beispielsweise kann ein Behälter, in dem nur noch die Hälfte des Inhalts vorhanden ist, nicht mehr über die, für die entsprechende Anwendung notwendige Distanz elektronisch ausgelesen werden und es kann nicht auf die hinterlegten Daten zugegriffen werden, die in dem RFID-Chip gespeichert sind.

Mittels des beschriebenen Transponderetiketts werden gezielt mehrere Resonanzfrequenzen durch die Antennenstruktur bereitgestellt, sodass auch trotz einer Frequenzverschiebung der Resonanzfrequenz eine andere Resonanz genutzt werden kann, die durch die Verschiebung in den Lesebereich des Lesegeräts rückt. Somit sind eine Kommunikation mit einem Lesegerät und eine zuverlässige elektronische Identifizierung eines Primärgefäßes mittels RFID auch unabhängig von den zuvor beschriebenen Randbedingungen möglich. Die Antennenstruktur ist hinsichtlich ihrer Abstrahlcharakteristik und einer Lesereichweite auf ein vorgesehenes Lesegerät zum Auslesen abgestimmt ausgebildet.

Zum Beispiel weist die Antennenstruktur auf einer Seite der Antennenschleife zwei mäanderförmige Antennenarme auf, die als Dipolantennen elektromagnetisch gekoppelte Resonatoren ausbilden. Auf der gegenüberliegenden anderen Seite der Antennenschleife ist zum Beispiel nur ein Antennenarm vorgesehen, der einen weiteren Dipolresonator einrichtet. Zusammen mit der inneren Antennenschleife können somit durch die Antennenstruktur, je nach Kopplungsstärke der einzelnen Antennenkomponenten zueinander beispielsweise vier Resonanzfrequenzen gezielt bereitgestellt werden, welche für den ungefüllten Behälter beispielsweise bei 500 MHz, 865 MHz, 975 MHz und 1050 MHz eingerichtet sind. In diesem Zustand würde die Resonanz bei 865 MHz optimal in den Lesebereich des Lesegerätes fallen. Bei einem halben Füllstand kommt es zu einer Frequenzverschiebung, sodass zum Beispiel die Resonanzfrequenz von 975 MHz in den Lesebereich eines RFID-Lesegeräts (in diesem Beispiel 865 MHz - 868 MHz) rückt. Ist das Gefäß vollständig gefüllt und weist den maximalen Füllstand auf, kann die damit einhergehende weitere Frequenzverschiebung mit der ursprünglichen Resonanzfrequenz bei 1050 MHz berücksichtigt werden und das Gefäß kann auch in diesem Zustand elektronisch ausgelesen werden. Eine Frequenzverschiebung erfolgt mit steigendem Füllstand eines dissipativen Mediums hin zu niedrigeren Frequenzen.

Es ist eine Erkenntnis im Zusammenhang mit der vorliegenden Erfindung, dass in einem ungekoppelten System durch die Kopplung von Antennenarmen und einer inneren Antennenschleife eine Modenanzahl gezielt beeinflusst werden kann. Zum Beispiel wird mindestens eine der beiden Resonanzen aufgespalten und es kommt in erster Näherung zu drei Moden. Wird für ein solches System mit Antennenarmen auch eine innere Antennenschleife berücksichtigt, können zum Beispiel sechs Schwingungsmoden realisiert und genutzt werden.

Gemäß einer Weiterbildung des Transponderetiketts weisen beide Antennenabschnitte jeweils einen ersten mäanderförmigen Antennenarm und einen zweiten mäanderförmigen Antennenarm auf. Die jeweiligen Antennenarme sind dabei in einem vorgegebenen Abstand voneinander angeordnet und elektromagnetisch miteinander gekoppelt. Somit können noch weitere Resonanzfrequenzen ausgebildet und durch die Antennenstruktur für ein Auslesen bereitgestellt werden. Gemäß einer solchen Ausführungsform mit jeweils zwei mäanderförmigen Antennenarme auf beiden Seiten der Antennenschleife sind sechs Resonanzfrequenzen einrichtbar, die vorzugsweise auf verschiedene Randbindungen abgestimmt sind, um ein besonders sicheres und zuverlässiges elektronisches Auslesen des RFID-Chips und Identifizieren des Gefäßes zu ermöglichen. Darüber hinaus kann die Antennenstruktur des Transponderetiketts auch drei oder mehrere mäanderförmige Antennenarme in einem jeweiligen Antennenabschnitt aufweisen, die vorgegeben beabstandet sind, sodass sie elektromagnetisch miteinander koppeln und eine höhere Modenzahl von Resonanzfrequenzen bereitstellen.

Gemäß einer Weiterbildung des Transponderetiketts weisen der jeweilige erste und zweite Antennenarm eine rechteckige Mäanderform auf, mit jeweils einer Mehrzahl von geradlinigen Abschnitten mit vorgegebener Länge. Die Länge der einzelnen Abschnitte sowie die Gesamtlänge eines jeweiligen Antennenarms wirken sich auf die induktive und kapazitive Kopplung untereinander aus und bestimmen daher eine Kopplungsstärke und ein Einrichten gewünschter Resonanzfrequenzen. Die rechteckige Mäanderform eines oder mehrerer Antennenarme ermöglicht eine besonders platzsparende und dichte Antennenstruktur. Alternativ oder zusätzlich können die Antennenarme einen wellenförmigen oder kreisförmigen Mäanderverlauf aufweisen. Zudem können die Antennenarme auch abschnittsweise oder vollständig unterschiedliche mäanderförmige Verläufe aufweisen. Die Antennenarme sind jeweils so ausgebildet, dass eine vorgegebene elektromagnetische Kopplung zwischen ihnen realisierbar ist, die das kontrollierte Einrichten von mehreren Resonanzfrequenzen ermöglicht.

Die Antennenarme sind einerseits mit der inneren Antennenschleife verbunden und weisen andererseits freie Endabschnitte auf. Dabei können die Antennenarme durchgehend linienförmig ausgebildet sein oder alternativ an deren freien Endabschnitten ein flächiges Antennenteil aufweisen, das sich nutzbringend auf die Leistungsfähigkeit und die Lesereichweite der RFID-Funktionseinheit auswirken kann.

Darüber hinaus können die jeweiligen Antennenarme an einem gemeinsamen oder an unterschiedlichen Kopplungspunkten mit der inneren Antennenschleife verbunden sein. Unterschiedliche Kopplungspositionen bilden unterschiedliche Phasenpunkte aus und können sich auch auf das Einrichten der verschiedenen Moden auswirken und entsprechend bei dem Ausbilden der Antennenstruktur berücksichtigt werden.

Ferner wirkt sich auch eine Linienbreite der Antennenarme auf die elektromagnetische Kopplung und das Ausbilden der Resonanzfrequenzen aus. Demgemäß kann der jeweilige erste und/oder zweite Antennenarm eine Linienbreite zwischen 150- 1000 µm aufweisen. Die Linienbreite bezieht sich dabei auf eine Ausdehnung parallel zur Ebene der Trägerschicht. Die Linienbreite entspricht daher der Ausdehnung des jeweiligen Antennenarms in Aufsicht auf das Transponderetikett.

Die Gesamtlänge der einzelnen Antennenarme bestimmt die Grundfrequenz der ungekoppelten Schwingungssysteme. Demgemäß kann der jeweilige erste und/oder zweite Antennenarm zum Beispiel eine Gesamtlänge zwischen 20 - 120 mm aufweisen.

Die Gesamtlänge bezieht dabei auf eine Ausdehnung der Antennenarme entlang ihrer überwiegenden Linienform von dem freien Endabschnitt bis zu dem Kopplungspunkt, an dem sie mit der Antennenschleife koppeln.

Die Länge der Abschnitte der Antennenarme, über welche diese parallel verlaufen bestimmt das Maß der Kopplungsstärke. In diesen Bereichen koppeln beide Antennenarme sowohl induktiv als auch kapazitiv und bewirken somit ein Aufspalten der Resonanzfrequenzen in Bezug auf ein ungekoppeltes System. Die Länge dieser Abschnitte kann von nahezu 0 mm bis hin zur Gesamtlänge der einzelnen Antennenarme betragen.

Insbesondere können eine Abschnittslänge und/oder eine Gesamtlänge des jeweiligen ersten und/oder zweiten Antennenarms in Abstimmung auf das zu etikettierende Gefäß ausgebildet sein. Entsprechendes gilt für eine Linienbreite des jeweiligen ersten und/oder zweiten Antennenarms und einen Abstand zwischen zwei benachbarten Antennenarme, die vorzugsweise in Abstimmung auf das zu etikettierende Gefäß ausgebildet sind. Dabei können ein Material des Gefäßes, ein vorgesehener Inhalt des Gefäßes und etwaige Füllstände des Inhalts berücksichtigt und bei dem Ausbilden der Antennenstruktur mit einbezogen werden. Die Antennenstruktur kann ferner für das Anbringen direkt an einem Gefäßverschluss oder einem Gefäßkörper vorgesehen sein, sodass die Antennenstruktur, insbesondere hinsichtlich ihrer Länge und ihrer Breite, und ein Umfang und/oder eine zum Anbringen vorgesehene Oberfläche des Gefäßes aufeinander abgestimmt ausgebildet werden können.

Das Transponderetikett kann ferner Sicherheitsmerkmale aufweisen, die ein Öffnen oder eine versuchte Manipulation des Gefäßes, für das das Transponderetikett vorgesehen ist, anzeigen können. Zum Beispiel kann eine Perforation vorhanden sein und mit Ausstanzungen oder Abzweigungen kombiniert sein, um zum Beispiel nach dem Öffnen des Gefäßes deutlich sichtbare Beschädigungen des Transponderetiketts zu hinterlassen. Das Transponderetikett kann insbesondere auch an einem Übergang zwischen einem Gefäßverschluss und einem Gefäßkörper angebracht sein, sodass ein Öffnen des Gefäßes oder versuchtes Entfernen des Transponderetiketts zu einer gezielten Zerstörung führt. Alternativ oder zusätzlich kann das Transponderetikett eine Folie oder ein Folienelement aufweisen, das eine vorgegebene Einreißfestigkeit aufweist.

Die Trägerschicht des Transponderetiketts umfasst insbesondere eine Klebeschicht, sodass das Transponderetikett mittels Kleben einfach und zuverlässig an dem Primärverschluss und/oder dem Körper des Gefäßes anordenbar ist. Das Transponderetikett kann einlagig oder mehrlagig ausgebildet sein. Es realisiert beispielsweise ein Rundum- oder Überrundumetikett, welches bezogen auf die Längsachse des Gefäßes einen Umfang des Gefäßverschlusses und/oder der Gefäßkörpers umschließt. Alternativ kann das Transponderetikett hinsichlich seiner Geometrie auch so ausgebildet sein, dass es einen Umfang des Gefäßes nur teilweise bedeckt.

Gemäß einem weiteren Aspekt umfasst die Erfindung eine Verwendung einer Ausgestaltung des beschriebenen Transponderetiketts für ein Gefäß mit einem Gefäßkörper und einem Gefäßverschluss, wie einer Spritze, einem Injektionsfläschchen oder einem Vial.

Gemäß einem weiteren Aspekt der Erfindung umfasst ein System ein Gefäß, zum Beispiel eines der zuvor beschriebenen mit einem Gefäßkörper und einem Gefäßverschluss, und eine Ausgestaltung des beschriebenen Transponderetiketts, das mit dem Gefäßkörper und/oder dem Gefäßverschluss verbunden ist.

Dadurch, dass sich die Verwendung und das System auf eine Ausgestaltung des beschriebenen Transponderetiketts beziehen oder eine solche umfassen, sind die beschriebenen Eigenschaften und Merkmale des Transponderetiketts auch für die Verwendung und für das System offenbart und umgekehrt.

Gemäß einem weiteren Aspekt der Erfindung umfasst ein Verfahren zum Herstellen einer Ausgestaltung des Transponderetiketts ein Bereitstellen einer Trägerschicht, und ein Ausbilden einer RFID-Funktionseinheit mit einem RFID-Chip und einer mit diesem gekoppelten Antennenstruktur auf der Trägerschicht. Die Antennenstruktur wird mit einem ersten Antennenabschnitt, einem zweiten Antennenabschnitt und einer Antennenschleife ausgebildet, sodass diese zwischen dem ersten und dem zweiten Antennenabschnitt angeordnet und mit diesen gekoppelt ist. Zumindest einer der beiden Antennenabschnitte wird mit einem ersten mäanderförmigen Antennenarm und einem zweiten mäanderförmigen Antennenarm ausgebildet, sodass diese als separate Antennenarme ausgebildet und in einem vorgegebenen Abstand voneinander angeordnet und elektromagnetisch miteinander gekoppelt und jeweils mit der Antennenschleife gekoppelt sind. Die Antennenstruktur der RFID-Funktionseinheit kann zum Beispiel mittels Ätzen von Aluminium und/oder mittels Drucken einer Silberleitpaste auf der Trägerschicht ausgebildet werden.

Dadurch, dass sich das Verfahren auf ein Herstellen einer Ausgestaltung des beschriebenen Transponderetiketts bezieht, sind die beschriebenen Eigenschaften und Merkmale des Transponderetiketts auch für das Verfahren offenbart und umgekehrt.

Mittels des beschriebenen Transponderetiketts ist eine übersichtliche und besonders zuverlässige RFID-Funktionalisierung von Gefäßen realisierbar, die verschiedene Randbedingungen, wie Material, Inhalt und unterschiedliche Füllstände, berücksichtigen kann. Es ist daher nicht erforderlich, komplexe Etikettenaufbauten vorzusehen, die zum Beispiel ein Ausbilden einer Etikettenfahne zur Verbesserung von Auslesebedingungen vorsehen.

Es ist eine Erkenntnis im Zusammenhang mit der vorliegenden Erfindung, dass bei einer Etikettenfahne, unter anderem sichergestellt sein muss, dass das Fähnchen auch unter allen Umständen vom Primärcontainer absteht und nur von Luft umgeben ist. Ist dies nicht der Fall, werden also die Fähnchen einzelner Primärcontainer durch benachbarte Container oder aber auch durch die Umverpackung an den zu kennzeichnenden Container gedrückt, so ergibt sich ein von Luft abweichendes Umfeld und die Leistungsfähigkeit einer RFID-Komponente kann dadurch signifikant beeinträchtigt werden. Solche Beeinträchtigungen können sehr leicht dazu führen, dass die RFID-Komponente in dem entsprechenden Anwendungsumfeld nicht mehr zuverlässig auslesbar ist.

Darüber hinaus benötigt unabhängig der Einschränkung der RFID-Funktionalität das Vorsehen einer ausbildbaren Etikettenfahne zusätzlichen Materialbedarf und erhöht damit Kosten und kann zudem die Handhabung des Containers im Anwendungsfall, beispielsweise beim Verabreichen eines Medikamentes, erschweren oder behindern. Mittels des beschriebenen Transponderetiketts können der Materialbedarf und die Kosten sehr gering gehalten werden und zudem gibt es keine nachteiligen Auswirkungen auf eine Handhabung eines entsprechenden Gefäßes, an dem das Transponderetikett angebracht ist.

Das beschriebene Transponderetikett ist mit seiner speziellen Antennenstruktur so ausgebildet, dass es den Effekt gekoppelter Resonatoren nutzt, um die Anzahl der möglichen Schwingungsmoden zu erhöhen und damit Schwingungsamplituden im gewünschten Frequenzband des vorgegebenen Lesegeräts für unterschiedliche Umgebungsbedingungen, wie unterschiedliche Füllstände und unterschiedliche Lösungen aufgrund von Salzgehalt, bereitstellt. Dadurch, dass die mäanderförmigen Antennenarme als Dipolresonatoren miteinander gekoppelt sind, spüren die Antennenarme untereinander den gegenseitigen Einfluss, sodass sie sich gegenseitig in ihren elektromagnetischen Eigenschaften beeinflussen. In Bezug auf das Gesamtsystem der Antennenstruktur kann somit gezielt eine Vervielfältigung der möglichen Schwingungsmoden eingerichtet werden. Es ergeben sich symmetrische und antisymmetrische Moden, deren Position im Frequenzraum und deren Ausprägung in Bezug auf ihre jeweilige Amplitude und Güte von den Eigenfrequenzen der ungekoppelten Einzelsysteme bzw. Antennenarme und der Stärke der wechselseitigen Kopplung abhängt. Die kontrolliert ausgebildeten mehrfachen Resonanzfrequenzen ermöglichen es, unabhängig von einigen Umgebungsbedingungen, Daten auf dem RFID-Chip zuverlässig elektronisch auszulesen.

Zur weiteren Erläuterung der Modenkopplung können zum Beispiel folgende beiden Extremfälle betrachtet werden: ein erster Extremfall ist beispielsweise dadurch gegeben, dass das Gefäß komplett entleert oder ungefüllt ist, sodass ein kleinstmöglicher Einfluss der Umgebung vorliegt und keine Frequenzverschiebung und Dämpfung durch ein dissipatives Medium gegeben ist. Der zweite Extremfall ist beispielsweise dadurch gegeben, dass das Gefäß vollständig gefüllt ist, sodass diesbezüglich ein maximaler Einfluss der Umgebung vorliegt und eine größtmögliche Frequenzverschiebung und maximale Dämpfung durch das dissipative Medium gegeben ist. Im Falle von Wasser als dissipatives Medium, kann sich eine Frequenzverschiebung größer als 200 MHz ergeben. Bei einer typischen Halbwertsbreite von Resonanzfrequenzen von ca. 20 MHz ist es nachvollziehbar, dass ein Einzelmodenresonator nur in einem der beiden Fälle eine brauchbare Resonanzamplitude im gewünschten Frequenzband ermöglicht.

In Bezug auf das behördlich vorgegebene RFID-Frequenzband in Europa zum Auslesen einer RFID-Funktionalität erstreckt sich das zulässige Frequenzband von 865-868 MHz und weist daher eine Bandbreite von 3 MHz auf. In anderen Regionen, wie den USA, ist zum Beispiel ein Auslesen einer RFID-Funktionalität in einem Frequenzband von 902-928 MHz zulässig und weist daher eine Bandbreite von 26 MHz auf. Entsprechend können die Resonanzfrequenzen des Transponderetiketts an die jeweilige Region angepasst werden, für die es in einer späteren Verwundung vorgesehen ist.

Indem die Antennenstruktur des Transponderetiketts mit gekoppelten Resonanzfrequenzen ausgebildet und die Kopplung auf die angedachten Anwendungsfälle gezielt abgestimmt sind, so kann erreicht werden, dass in beiden Fällen sowohl bei vollständiger Füllung als auch bei Nichtfüllung eine jeweilige Resonanzmode in dem gewünschten Frequenzband des Auslesegeräts realisiert wird. Somit können mittels der multimodalen Antennenstruktur anwendungstypische Lesereichweiten bei unterschiedlichen Umgebungssituationen realisiert werden. Die Antennenstruktur kann mittels des Transponderetiketts direkt auf den Container aufgebracht werden.

Prinzipiell können auch zwei, drei oder mehr Resonatoren bzw. Antennenarme miteinander elektromagnetisch gekoppelt werden. Die für die Kopplungsstärke verantwortlichen Parameter wie Linienbreiten der einzelnen Antennenarme, Abstände der Linien der Antennenarme zueinander, Länge der einzelnen Antennenarme, sowie die Position der Anschlusspunkte der Antennenarme an die innere Antennenschleife können ebenfalls variiert und an den jeweiligen Anwendungsfall angepasst werden.

Im Folgenden sind Ausführungsbeispiele der Erfindung anhand schematischer Zeichnungen erläutert. Es zeigen:
- Figur 1: ein Ausführungsbeispiel eines Systems mit einem Gefäß und einer daran angebrachten Transponderetikett,
- Figuren 2-5: Ausführungsbeispiele des Transponderetiketts nach Figur 1, und
- Figur 6: ein Ablaufdiagramm für ein Verfahren zum Herstellen des Transponderetiketts nach den Figuren 1-5.

Elemente gleicher Konstruktion und Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit zugehörigen Bezugszeichen gekennzeichnet.

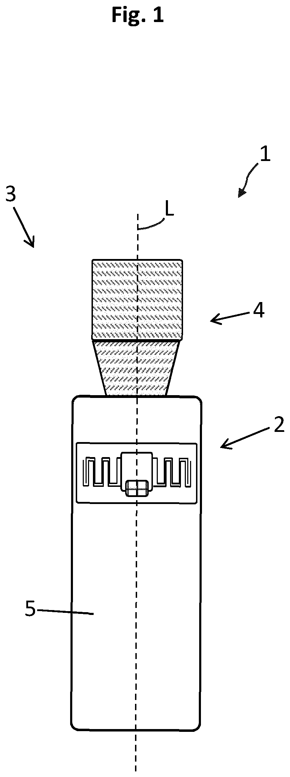

Die Figur 1 zeigt in einer schematischen Seitenansicht ein System 1 mit einem Gefäß 3 und einem Transponderetikett 2, das an dem Gefäß 3 appliziert ist. Das Gefäß 3 umfasst einen Gefäßkörper 5 und einen Gefäßverschluss 4, der mit dem Gefäßkörper 5 gekoppelt und in Bezug auf eine Längsachse L oberhalb des Gefäßkörpers 5 angeordnet ist. Das Transponderetikett 2 ist gemäß Figur 1 an dem Gefäßkörper 5 befestigt. Alternativ oder zusätzlich kann das Transponderetikett 2 an dem Gefäßverschluss 4 befestigt sein und/oder um 90° oder anderweitig gedreht orientiert sein.

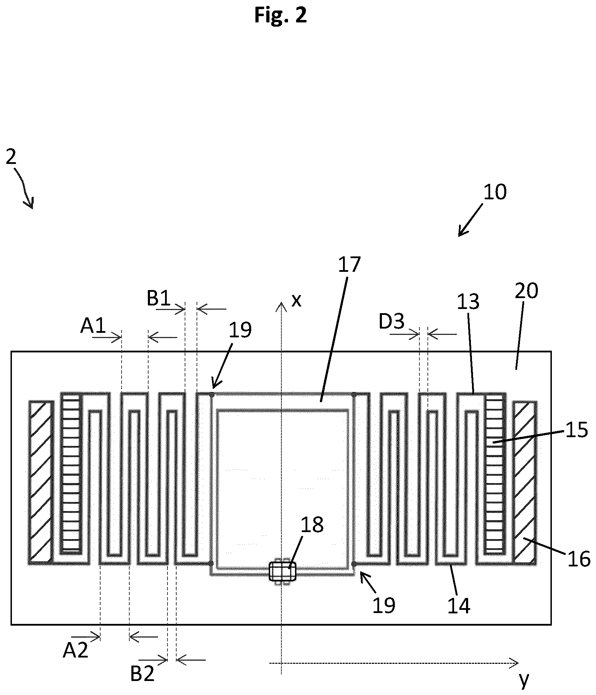

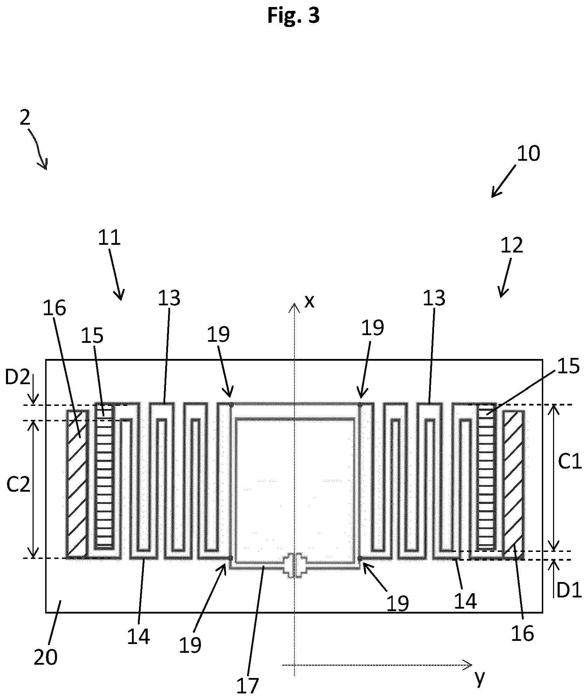

Die Figuren 2-5 zeigen Ausführungsbeispiele des Transponderetiketts 2 in einer schematischen Aufsicht. Die Figuren 2 und 3 zeigen ein Ausführungsbeispiel des Transponderetiketts 2, das eine Trägerschicht 20 und eine RFID-Funktionseinheit mit einem RFID-Chip 18 und einer Antennenstruktur 10 umfasst, die mit der Trägerschicht 20 gekoppelt sind. Die Antennenstruktur 10 umfasst einen ersten Antennenabschnitt 11, einen zweiten Antennenabschnitt 12 und eine Antennenschleife 17, die zwischen dem ersten und dem zweiten Antennenabschnitt 11, 12 angeordnet und mit diesen gekoppelt ist. Gemäß den Figuren 2 und 3 kann die Antennenschleife 17 auch als innere Antennenschleife bezeichnet werden, während der erste Antennenabschnitt 11 links und der zweite Antennenabschnitt 12 rechts von ihr an unterschiedlichen Kopplungspunkten 19 mit der inneren Antennenschleife 17 gekoppelt sind.

Im Rahmen dieser Beschreibung beziehen sich Begriffe wie "oben" und "unten" sowie "rechts" und "links" auf eine Anordnung beziehungsweise Ausrichtung des Transponderetiketts 2, wie sie in den Figuren illustriert sind. Hilfsweise ist ein jeweiliges Koordinatensystem mit einer vertikalen x-Richtung und einer horizontalen y-Richtung in den Figuren 2-5 eingezeichnet.

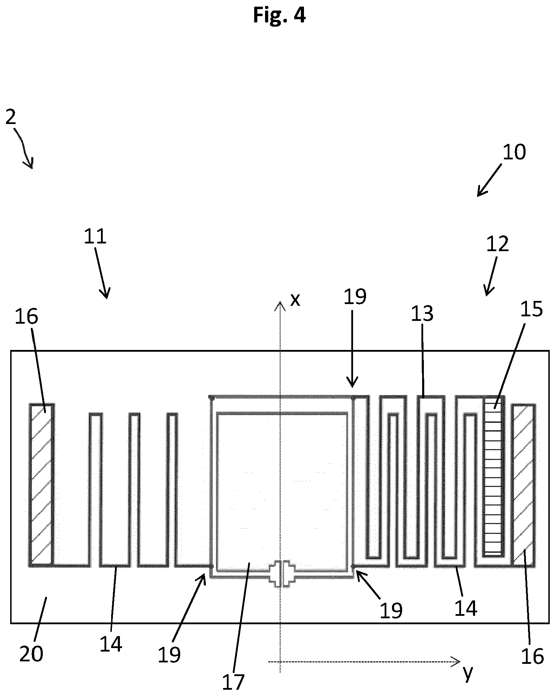

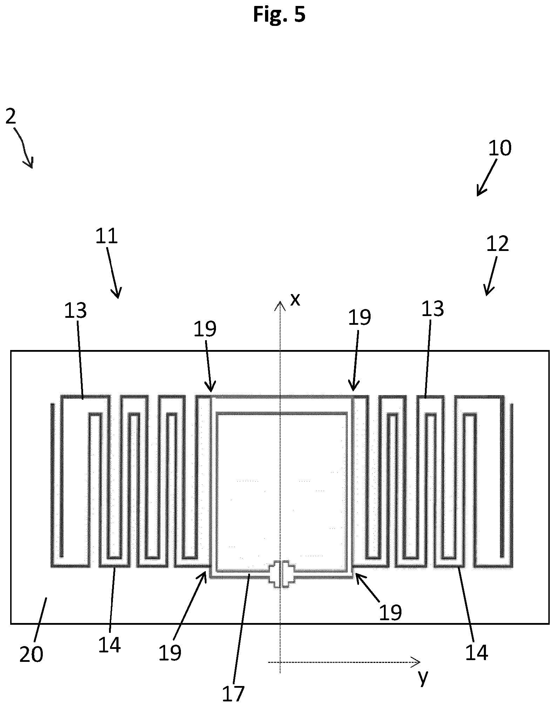

Die beiden Antennenabschnitte 11 und 12 weisen jeweils einen ersten mäanderförmigen Antennenarm 13 und einen zweiten mäanderförmigen Antennenarm 14 auf, die in einem vorgegebenen Abstand D1, D2, D3 voneinander angeordnet und elektromagnetisch miteinander gekoppelt sind. Die Antennenarme 13, 14 weisen jeweils eine rechteckige Mäanderform auf, wobei der jeweils zweite Antennenarm 14 überwiegend innerhalb der Mäanderform des jeweils ersten Antennenarms 13 angeordnet ist. Die Antennenarme 13, 14 sind überwiegend linienförmig ausgebildet und weisen eine vorgegebene Linienbreite auf. An einen jeweiligen freien Ende weisen die Antennenarme 13, 14 jeweils ein flächiges Antennenteil 15 oder 16 auf, das sich insbesondere nutzbringend in Bezug auf eine Lesereichweite und eine Performance der RFID-Funktionseinheit auswirken kann. Alternativ können die Antennenarme 13, 14 aber auch durchgehend linienförmig ausgebildet sein (s. Figur 5). Darüber hinaus kann ein Antennenabschnitt 11, 12 auch nur einen Antennenarm 13 oder 14 aufweisen (s. Figur 4). Alternativ kann ein Antennenabschnitt 11, 12 auch drei oder mehr Antennenarme 13, 14 aufweisen, die teilweise oder vollständig miteinander elektromagnetisch koppeln.

Die Antennenarme 13 und 14 sind so vorgegeben ausgebildet und zueinander angeordnet, dass sie induktiv und kapazitiv miteinander koppeln und eine kontrollierte Anzahl von Resonanzfrequenzen der Antennenstruktur 10 einrichten. Diesbezüglich können folgende Parameter das Ausbilden der Resonanzfrequenzen beeinflussen: eine Linienbreite des jeweiligen Antennenarms 13, 14; eine Gesamtlänge des jeweiligen Antennenarms 13, 14; eine äußere Breite A1, A2 des jeweiligen Antennenarms 13, 14 (s. Figur 2); eine innere Breite B1, B2 des jeweiligen Antennenarms 13, 14 (s. Figur 2); horizontale und/oder vertikale Abstände D1, D2, D3 zwischen den Antennenarmen 13, 14 (s. Figuren 2 und 3); eine Höhe C1, C2 der jeweiligen Antennenarme 13, 14 (s. Figur 3). In diesem Zusammenhang beziehen sich horizontale Abstände oder Breiten sowie vertikale Abstande und Höhen auf die eingezeichneten x- und y-Richtungen. Figur 2 illustriert daher im Wesentlichen horizontale Abmessungen entlang der y-Richtung. Figur 3 illustriert daher im Wesentlichen vertikale Abmessungen entlang der x-Richtung. Die Figuren 2-5 können aber auch als Aufsicht verstanden werden, sodass die x- und y-Richtung zueinander senkrechte Richtungen innerhalb einer horizontalen Ebene präsentieren.

Die Linenbreite eines jeweiligen Antennenarms 13, 14 bezieht sich auf die dargestellte x-y-Ebene und weist zum Beispiel einen Wert zwischen 150-1000 µm auf. Die Gesamtlänge des jeweiligen Antennenarms 13, 14 vom äußeren freien Ende bis zu einem jeweiligen Kopplungspunkt 19, an dem der Antennenarm 13, 14 mit der inneren Antennenschleife 17 verbunden ist, weist zum Beispiel einen Wert zwischen 20-120 mm auf. Die Höhe C1, C2 des jeweiligen Antennenarms 13, 14 kann zum Beispiel einen Wert zwischen 10-20 mm aufweisen. Die Abstände D1, D2 und D3 können jeweils einen Wert aufweisen, der 10%-150% der Linienbreite entspricht.

Die beschriebenen und illustrierten Antennenstrukturen 10 umfassen jeweils eine Kopplung zumindest zweier mäanderförmiger Dipolantennen in Ausgestaltung der Antennenarme 13, 14. Beide Antennenarme 13, 14 besitzen für sich alleine ähnliche Resonanzfrequenzen. Die jeweilige Kopplung der beiden Antennenarme 13, 14 eines der Antennenabschnitte 11, 12 ist sowohl induktiv, als auch kapazitiv und hängt von der Länge der parallel verlaufenden Leiterabschnitte, deren Abstand und der jeweiligen Linienbreiten ab. Zudem koppeln sie an unterschiedlichen Phasenpunkten 19 in die innere Antennenschleife 17. Durch Verändern dieser Parameter kann die Kopplungsstärke gezielt variiert und damit auch das Resonanzverhalten der Antennenstruktur 10 kontrolliert vorgegeben werden. Durch geeignete Variation der Kopplungsstärke kann die Antennenstruktur 10 als Gesamtsystem auf vorgegebene Umgebungsbedingungen in der vorgesehenen Anwendung abgestimmt werden.

Die Antennenarme 13, 14 sowie die Antennenschleife 17 beeinflussen sich jeder gegenseitig im Hinblick auf ihre elektromagnetischen Eigenschaften, sodass die Kopplung die Mehrzahl von Resonanzfrequenzen sowie ihre Ausprägung bestimmt. Gemäß den Ausführungsbeispielen nach den Figuren 2-3 und 5 sind sechs unterschiedliche Resonanzfrequenzen bereitgestellt. Im Vergleich dazu stellt die Ausführung der Antennenstruktur 10 nach Figur 4 vier verschiedene Resonanzfrequenzen zum Auslesen bereit. Alternativ kann die Antennenstruktur 10 auch so ausgestaltet sein, dass sie zumindest zwei oder drei unterschiedliche Resonanzfrequenzen bereitgestellt. Je nach Kopplungsstärke, vorhandener Symmetrien und Frequenzabstand im Vergleich ungekoppelter Schwingungssysteme variiert die Modenzahl. In Bezug auf die Ausführungsbeispiele nach den Figuren 2-3 kann eine Modenzahl zum Beispiel zwischen vier und acht Moden und nach Figur 4 zwischen zwei und vier Moden eingerichtet werden.

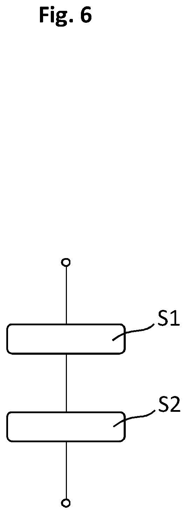

Ein Verfahren zum Herstellen des Transponderetiketts 2 kann gemäß dem Ablaufdiagramm in Figur 6 wie folgt durchgeführt werden: In einem Schritt S1 wird die Trägerschicht 20, zum Beispiel in Form einer PET-Kunststofffolie, bereitgestellt.

In einem Schritt S2 wird die RFID-Funktionseinheit mit dem RFID-Chip 18 und der mit diesem gekoppelten Antennenstruktur 10 auf der Trägerschicht 20 ausgebildet. Dabei kann die Antennenstruktur 10 mittels Ätzen und/oder Drucken von Aluminium und/oder Silber auf der Trägerschicht 20 ausgebildet werden. Die Antennenstruktur 10 wird dabei mit den beiden Antennenabschnitt 11 und 12 und der dazwischen liegenden Antennenschleife 17 ausgebildet, sodass diese durch zugehörige Kopplungspunkte 19 miteinander verbunden sind. Zumindest einer der beiden Antennenabschnitte 11, 12 wird mit dem ersten und dem zweiten mäanderförmigen Antennenarm 13 und 14 ausgebildet wird, sodass diese in einem vorgegebenen Abstand D1, D2, D3 voneinander angeordnet und elektromagnetisch miteinander gekoppelt sind.

Auf diese Weise kann eine Ausgestaltung des Transponderetiketts 2 ausgebildet werden, bei der die Antennenstruktur 10 eine Multi-Moden UHF RFID-Kennzeichnung für kleine Primärcontainer im pharmazeutischen Umfeld ermöglicht. Aufgebracht auf relativ kleine Primärcontainer, wie Spritzen, kann mittels des Transponderetiketts 2 trotz unterschiedlicher Flüssigkeitsfüllstände in dem Gefäß 3 eine zuverlässige RFID-Kennzeichnung und elektronische Auslesung eingerichtet werden. Durch die gezielte Nutzung gekoppelter Resonatoren, stellt die Antennenstruktur 10 eine erhöhte Anzahl möglicher Schwingungsmoden bereit, die mittels eines Lesegeräts jeweils ausgelesen werden können. Ein Risiko, dass aufgrund einer Frequenzverschiebung die RFID-Funktionseinheit nicht zuverlässig ausgelesen werden kann, kann mittels des beschriebenen Aufbaus des Transponderetiketts 2 signifikant reduziert werden.

### Bezugszeichenliste

- 1: System
- 2: Transponderetikett
- 3: Gefäß
- 4: Gefäßverschluss
- 5: Gefäßkörper
- 10: Antennenstruktur
- 11: erster Antennenabschnitt
- 12: zweiter Antennenabschnitt
- 13: erster mäanderförmiger Antennenarm des jeweiligen Antennenabschnitts
- 14: zweiter mäanderförmiger Antennenarm des jeweiligen Antennenabschnitts
- 15: erster flächiger Antennenteil des jeweiligen Antennenabschnitts
- 16: zweiter flächiger Antennenteil des jeweiligen Antennenabschnitts
- 17: innere Antennenschleife
- 18: RFID-Chip
- 19: Kopplungspunkt zwischen Antennenabschnitt und Antennenschleife
- 20: Trägerschicht

- A(i): äußere Breite des jeweiligen mäanderförmigen Antennenarms
- B(i): innere Breite des jeweiligen mäanderförmigen Antennenarms
- C(i): Höhe des jeweiligen mäanderförmigen Antennenarms
- D1: erster Abstand zwischen den mäanderförmigen Antennenarmen
- D2: zweiter Abstand zwischen den mäanderförmigen Antennenarmen
- D3: dritter Abstand zwischen den mäanderförmigen Antennenarmen
- L: Längsachse des Gefäßes
- S(i): Schritt eines Verfahrens zum Herstellen eines Transponderetiketts

## Patentansprüche

1. Transponderetikett (2) für ein Gefäß (3), aufweisend:
- eine Trägerschicht (20), und
- eine RFID-Funktionseinheit mit einem RFID-Chip (18) und einer mit diesem gekoppelten Antennenstruktur (10), die mit der Trägerschicht (20) gekoppelt sind, wobei die Antennenstruktur (10) einen ersten Antennenabschnitt (11), einen zweiten Antennenabschnitt (12) und eine Antennenschleife (17) aufweist, die zwischen dem ersten und dem zweiten Antennenabschnitt (11, 12) angeordnet und mit diesen gekoppelt ist, und wobei zumindest einer der beiden Antennenabschnitte (11, 12) einen ersten mäanderförmigen Antennenarm (13) und einen zweiten mäanderförmigen Antennenarm (14) umfasst, die als separate Antennenarme ausgebildet und in einem vorgegebenen Abstand (D1, D2, D3) voneinander angeordnet und elektromagnetisch miteinander gekoppelt sind und die jeweils mit der Antennenschleife (17) gekoppelt sind, sodass eine vorgegebene Anzahl von Schwingungsmoden der Antennenstruktur (10) eingerichtet ist.

2. Transponderetikett (10) nach Anspruch 1, bei dem beide Antennenabschnitte (11, 12) jeweils einen ersten mäanderförmigen Antennenarm (13) und einen zweiten mäanderförmigen Antennenarm (14) umfassen, die jeweils in einem vorgegebenen Abstand (D1, D2, D3) voneinander angeordnet und elektromagnetisch miteinander gekoppelt sind.

3. Transponderetikett (10) nach einem der vorhergehenden Ansprüche, bei dem der jeweilige erste Antennenarm (13) und der jeweilige zweite Antennenarm (14) eine rechteckige Mäanderform aufweisen, die jeweils eine Mehrzahl von geradlinigen Abschnitten mit vorgegebener Länge (A1, A2, B1, B2, C1, C2) umfasst.

4. Transponderetikett (10) nach einem der vorhergehenden Ansprüche, bei dem zumindest einer der Antennenarme (13, 14) an einem freien Ende ein flächiges Antennenteil (15, 16) aufweist.

5. Transponderetikett (10) nach einem der vorhergehenden Ansprüche, bei dem der jeweilige erste Antennenarm (13) und der jeweilige zweite Antennenarm (14) an unterschiedlichen Kopplungspunkten (19) mit der inneren Antennenschleife (17) gekoppelt sind.

6. Transponderetikett (10) nach einem der vorhergehenden Ansprüche, bei dem der jeweilige erste Antennenarm (13) und/oder der jeweilige zweite Antennenarm (14) eine Breite zwischen 150-1000 µm aufweisen.

7. Transponderetikett (10) nach einem der vorhergehenden Ansprüche, bei dem der jeweilige erste Antennenarm (13) und/oder der jeweilige zweite Antennenarm (14) eine Gesamtlänge zwischen 20-120 mm aufweisen.

8. Transponderetikett (10) nach einem der vorhergehenden Ansprüche, bei dem der jeweilige erste Antennenarm (13) und/oder der jeweilige zweite Antennenarm (14) längliche Abschnitte mit einer Länge (C1, C2) zwischen 10-20 mm aufweisen.

9. Transponderetikett (10) nach einem der vorhergehenden Ansprüche, bei dem eine Abschnittslänge (A1, A2, B1, B2, C1, C2) und/oder eine Gesamtlänge des jeweiligen ersten und/oder zweiten Antennenarms (13, 14) in Abstimmung auf das zu etikettierende Gefäß (3) ausgebildet sind.

10. Transponderetikett (10) nach einem der vorhergehenden Ansprüche, bei dem eine Linienbreite des jeweiligen ersten und/oder zweiten Antennenarms (13, 14) in Abstimmung auf das zu etikettierende Gefäß (3) ausgebildet ist.

11. Transponderetikett (10) nach einem der vorhergehenden Ansprüche, bei dem der Abstand (D1, D2, D3) zwischen dem jeweiligen ersten und zweiten Antennenarm (13, 14) in Abstimmung auf das zu etikettierende Gefäß (3) ausgebildet ist.

12. Transponderetikett (10) nach einem der Ansprüche 9-11, bei dem die Linienbreite, die Abschnittslänge (A1, A2, B1, B2, C1, C2), die Gesamtlänge und/oder der Abstand (D1, D2, D3) in Abstimmung auf ein Material, einen Inhalt und/oder einen Füllstand des zu etikettierenden Gefäßes (3) ausgebildet sind.

13. System (1), aufweisend:
- ein Gefäß (3) mit einem Gefäßkörper (5) und einem Gefäßverschluss (4), und
- ein Transponderetikett (2) nach einem der vorhergehenden Ansprüche, das mit dem Gefäßkörper (5) und/oder dem Gefäßverschluss (4) verbunden ist.

14. Verfahren zum Herstellen eines Transponderetiketts (2) für ein Gefäß (3), umfassend:
- Bereitstellen einer Trägerschicht (20), und
- Ausbilden einer RFID-Funktionseinheit mit einem RFID-Chip (18) und einer mit diesem gekoppelten Antennenstruktur (10) auf der Trägerschicht (20), wobei die Antennenstruktur (10) mit einem ersten Antennenabschnitt (11), einem zweiten Antennenabschnitt (12) und einer Antennenschleife (17) ausgebildet wird, die zwischen dem ersten und dem zweiten Antennenabschnitt (11, 12) angeordnet und mit diesen gekoppelt ist, und wobei zumindest einer der beiden Antennenabschnitte (11, 12) mit einem ersten mäanderförmigen Antennenarm (13) und einem zweiten mäanderförmigen Antennenarm (14) ausgebildet wird, sodass diese als separate Antennenarme ausgebildet und in einem vorgegebenen Abstand (D1, D2, D3) voneinander angeordnet und elektromagnetisch miteinander gekoppelt und jeweils mit der Antennenschleife (17) gekoppelt sind.

15. Verfahren nach Anspruch 14, bei dem die Antennenstruktur (10) der RFID-Funktionseinheit mittels Ätzen und/oder Drucken auf der Trägerschicht (20) ausgebildet wird.

## Claims

1. Transponder label (2) for a container (3), comprising:
- a carrier layer (20), and
- an RFID functional unit comprising an RFID chip (18) and an antenna structure (10) coupled thereto and coupled to the carrier layer (20), wherein the antenna structure (10) comprises a first antenna section (11), a second antenna section (12) and an antenna loop (17) arranged between and coupled to the first and second antenna sections (11, 12), and wherein at least one of the two antenna sections (11, 12) comprises a first meander-shaped antenna arm (13) and a second meander-shaped antenna arm (14), which are formed as separate antenna arms and arranged at a predetermined distance (D1, D2, D3) from each other and electromagnetically coupled to each other and coupled to the antenna loop (17) each, so that a predetermined number of oscillation modes of the antenna structure (10) is set up.

2. Transponder label (10) according to claim 1, wherein both antenna sections (11, 12) each comprise a first meander-shaped antenna arm (13) and a second meander-shaped antenna arm (14), which are each arranged at a predetermined distance (D1, D2, D3) from one another and are electromagnetically coupled to one another.

3. Transponder label (10) according to one of the preceding claims, wherein the respective first antenna arm (13) and the respective second antenna arm (14) have a rectangular meander shape, each comprising a plurality of rectilinear sections of predetermined length (A1, A2, B1, B2, C1, C2).

4. Transponder label (10) according to one of the preceding claims, wherein at least one of the antenna arms (13, 14) comprises a flat antenna part (15, 16) at a free end.

5. Transponder label (10) according to one of the preceding claims, wherein the respective first antenna arm (13) and the respective second antenna arm (14) are coupled to the inner antenna loop (17) at different coupling points (19).

6. Transponder label (10) according to one of the preceding claims, wherein the respective first antenna arm (13) and/or the respective second antenna arm (14) have a width between 150-1000 µm.

7. Transponder label (10) according to any one of the preceding claims, wherein the respective first antenna arm (13) and/or the respective second antenna arm (14) have a total length between 20-120 mm.

8. Transponder label (10) according to one of the preceding claims, wherein the respective first antenna arm (13) and/or the respective second antenna arm (14) have elongated sections with a length (C1, C2) between 10-20 mm.

9. Transponder label (10) according to one of the preceding claims, wherein a section length (A1, A2, B1, B2, C1, C2) and/or an overall length of the respective first and/or second antenna arm (13, 14) are formed in coordination with the container (3) to be labeled.

10. Transponder label (10) according to one of the preceding claims, wherein a line width of the respective first and/or second antenna arm (13, 14) is formed in coordination with the container (3) to be labeled.

11. Transponder label (10) according to one of the preceding claims, wherein the distance (D1, D2, D3) between the respective first and second antenna arms (13, 14) is designed in coordination with the container (3) to be labeled.

12. Transponder label (10) according to one of claims 9-11, wherein the line width, the section length (A1, A2, B1, B2, C1, C2), the total length and/or the distance (D1, D2, D3) are designed in coordination with a material, a content and/or a fill level of the container (3) to be labeled.

13. System (1), comprising:
- a container (3) with a container body (5) and a container closure (4), and
- a transponder label (2) according to one of the preceding claims, which is connected to the container body (5) and/or the container closure (4).

14. Method for producing a transponder label (2) for a container (3), comprising:
- providing a carrier layer (20), and
- forming an RFID functional unit with an RFID chip (18) and an antenna structure (10) coupled thereto on the carrier layer (20), wherein the antenna structure (10) is formed with a first antenna section (11), a second antenna section (12) and an antenna loop (17) arranged between and coupled to the first and second antenna sections (11, 12) and coupled thereto, and wherein at least one of the two antenna sections (11, 12) is formed with a first meander-shaped antenna arm (13) and a second meander-shaped antenna arm (14), so that these are formed as separate antenna arms and arranged at a predetermined distance (D1, D2, D3) from each other and are electromagnetically coupled to each other and coupled to the antenna loop (17) each.

15. Method according to claim 14, wherein the antenna structure (10) of the RFID functional unit is formed on the carrier layer (20) by means of etching and/or printing.

## Revendications

1. Étiquette à transpondeur (2) pour un récipient (3), comprenant :
- une couche support (20), et
- une unité fonctionnelle RFID comprenant une puce RFID (18) et une structure d'antenne (10) couplée à celle-ci, lesquelles sont couplées à la couche support (20), la structure d'antenne (10) comprenant une première section d'antenne (11), une deuxième section d'antenne (12) et une boucle d'antenne (17) disposée entre la première et la deuxième section d'antenne (11, 12) et couplée à celles-ci, et au moins l'une des deux sections d'antenne (11, 12) comprenant un premier bras d'antenne en méandre (13) et un deuxième bras d'antenne en méandre (14), réalisés sous la forme de bras d'antenne séparés, disposés à une distance prédéterminée (D1, D2, D3) l'un de l'autre, couplés électromagnétiquement l'un à l'autre et chacun couplé à la boucle d'antenne (17) de telle sorte qu'un nombre prédéterminé de modes de résonance de la structure d'antenne (10) soit établi.

2. L'étiquette à transpondeur (10) selon la revendication 1, dans laquelle les deux sections d'antenne (11, 12) comprennent chacune un premier bras d'antenne en méandre (13) et un deuxième bras d'antenne en méandre (14), ceux-ci étant chacun disposés à une distance prédéterminée (D1, D2, D3) l'un de l'autre et couplés électromagnétiquement l'un à l'autre.

3. L'étiquette à transpondeur (10) selon l'une quelconque des revendications précédentes, dans laquelle le premier bras d'antenne (13) respectif et le deuxième bras d'antenne (14) respectif présentent une forme de méandre rectangulaire comprenant chacun une pluralité de sections rectilignes ayant une longueur prédéterminée (A1, A2, B1, B2, C1, C2).

4. L'étiquette à transpondeur (10) selon l'une quelconque des revendications précédentes, dans laquelle au moins l'un des bras d'antenne (13, 14) présente, à une extrémité libre, une partie d'antenne surfacique (15, 16).

5. L'étiquette à transpondeur (10) selon l'une quelconque des revendications précédentes, dans laquelle le premier bras d'antenne (13) respectif et le deuxième bras d'antenne (14) respectif sont couplés à la boucle d'antenne interne (17) en des points de couplage différents (19).

6. L'étiquette à transpondeur (10) selon l'une quelconque des revendications précédentes, dans laquelle le premier bras d'antenne (13) respectif et/ou le deuxième bras d'antenne (14) respectif présentent une largeur comprise entre 150 et 1000 µm.

7. L'étiquette à transpondeur (10) selon l'une quelconque des revendications précédentes, dans laquelle le premier bras d'antenne (13) respectif et/ou le deuxième bras d'antenne (14) respectif présentent une longueur totale comprise entre 20 et 120 mm.

8. L'étiquette à transpondeur (10) selon l'une quelconque des revendications précédentes, dans laquelle le premier bras d'antenne (13) respectif et/ou le deuxième bras d'antenne (14) respectif présentent des sections allongées ayant une longueur (C1, C2) comprise entre 10 et 20 mm.

9. L'étiquette à transpondeur (10) selon l'une quelconque des revendications précédentes, dans laquelle une longueur de section (A1, A2, B1, B2, C1, C2) et/ou une longueur totale du premier bras d'antenne (13) et/ou du deuxième bras d'antenne (14) respectif est réalisée en fonction du récipient (3) à étiqueter.

10. L'étiquette à transpondeur (10) selon l'une quelconque des revendications précédentes, dans laquelle une largeur de ligne du premier bras d'antenne (13) et/ou du deuxième bras d'antenne (14) respectif est réalisée en fonction du récipient (3) à étiqueter.

11. L'étiquette à transpondeur (10) selon l'une quelconque des revendications précédentes, dans laquelle la distance (D1, D2, D3) entre le premier bras d'antenne (13) respectif et le deuxième bras d'antenne (14) respectif est réalisée en fonction du récipient (3) à étiqueter.

12. L'étiquette à transpondeur (10) selon l'une quelconque des revendications 9 à 11, dans laquelle la largeur de ligne, la longueur de section (A1, A2, B1, B2, C1, C2), la longueur totale et/ou la distance (D1, D2, D3) sont réalisées en fonction d'un matériau, d'un contenu et/ou d'un niveau de remplissage du récipient (3) à étiqueter.

13. Système (1), comprenant :
- un récipient (3) comprenant un corps de récipient (5) et une fermeture de récipient (4), et
- une étiquette à transpondeur (2) selon l'une quelconque des revendications précédentes, reliée au corps de récipient (5) et/ou à la fermeture de récipient (4).

14. Procédé de fabrication d'une étiquette à transpondeur (2) pour un récipient (3), comprenant les étapes consistant à :
- mettre à disposition une couche support (20), et
- réaliser, sur la couche support (20), une unité fonctionnelle RFID comprenant une puce RFID (18) et une structure d'antenne (10) couplée à celle-ci, la structure d'antenne (10) étant réalisée avec une première section d'antenne (11), une deuxième section d'antenne (12) et une boucle d'antenne (17) disposée entre la première et la deuxième section d'antenne (11, 12) et couplée à celles-ci, au moins l'une des deux sections d'antenne (11, 12) étant réalisée avec un premier bras d'antenne en méandre (13) et un deuxième bras d'antenne en méandre (14), de sorte que ceux-ci soient réalisés sous la forme de bras d'antenne séparés, disposés à une distance prédéterminée (D1, D2, D3) l'un de l'autre, couplés électromagnétiquement l'un à l'autre et chacun couplé à la boucle d'antenne (17).

15. Le procédé selon la revendication 14, dans lequel la structure d'antenne (10) de l'unité fonctionnelle RFID est réalisée sur la couche support (20) par gravure et/ou par impression.
